# EUROPÄISCHE PATENTSCHRIFT

(11) **EP 1 543 657 B1**
(45) Veröffentlichungstag und Bekanntmachung des Hinweises auf die Patenterteilung: **27.08.2008**
(21) Anmeldenummer: 03784113.7
(22) Anmeldetag: 30.07.2003
(51) Int. Cl.: H04L 12/40, H04L 12/10

(54) **VORRICHTUNG ZUR BESTIMMUNG UND/ODER ÜBERWACHUNG EINER PHYSIKALISCHEN ODER CHEMISCHEN GRÖSSE**
DEVICE FOR DETERMINING AND/OR MONITORING A PHYSICAL OR CHEMICAL QUANTITY
DISPOSITIF PERMETTANT DE DETERMINER ET/OU DE SURVEILLER UNE GRANDEUR PHYSIQUE OU CHIMIQUE

(30) Priorität: 07.08.2002 DE 10236226
(43) Veröffentlichungstag der Anmeldung: 22.06.2005
(73) Patentinhaber: Endress + Hauser (Deutschland) Holding GmbH, 79576 Weil am Rhein (DE)
(72) Erfinder: KIRST, Michael, 79539 Lörrach (DE)
(74) Vertreter: Andres, Angelika Maria
(86) Internationale Anmeldenummer: PCT/EP2003/008425
(87) Internationale Veröffentlichungsnummer: WO 2004/015646

(56) Entgegenhaltungen:
- DE-A- 19 646 219
- DE-U- 20 107 114

## Beschreibung

Die Erfindung betrifft eine Vorrichtung zur Bestimmung und/oder Überwachung einer physikalischen oder chemischen Größe in einem Prozeß mit zumindest einem Feldgerät.

Zur Bestimmung physikalischer oder chemischer Prozeßgröße, wie z.B. einem Füllstand in einem Behälter, einem Volumen- oder Massedurchfluß durch eine Rohrleitung, einem Leitungs- oder Behälterinnendrucks, einer Mediumstemperatur etc. , werden die unterschiedlichsten Typen von Sensoren eingesetzt, denen naturgemäß die unterschiedlichsten physikalische Meßprinzipien zugrunde liegen.

So wird beispielsweise der Füllstand eines Füllguts in einem Behälter zumeist über die Laufzeit von Ultraschallwellen oder von elektromagnetischen Wellen, insbesondere von Mikrowellen ermittelt, die an der Oberfläche des Füllguts reflektiert werden. Beim Einsatz von Mikrowellen werden diese entweder frei in den Behälter in Richtung der Oberfläche des Füllguts abgestrahlt, oder die Mikrowellen werden entlang eines leitfähigen Elements in den Behälter hineingeführt. Ferner werden auch kapazitive und radiometrische Meßverfahren oftmals zur Füllstandsmessung herangezogen.

Zur Grenzstandsdetektion wird bevorzugt die Resonanzfrequenz eines Schwingstabes oder eines schwingfähigen Gebildes, das aus mehreren Schwingstäben besteht, ausgewertet. Bei dieser Meßmethode wird der Effekt ausgenutzt, daß die Resonanzfrequenz eine andere ist, je nachdem, ob die Schwingstäbe ihre Schwingungen frei oder in Kontakt mit dem Füllgut ausführen.

Wie unterschiedlich die einzelnen Meßvorrichtungen zur Bestimmung des Füllstandes oder einer anderen physikalischen Größe, beispielsweise des Durchflusses, auch immer aufgebaut sein mögen, eines ist ihnen gemeinsam: sie benötigen Energie. Diese Energie wird ihnen im Normalfall über elektrische Leitungen zugeführt.

Der Nachteil bekannter Meßvorrichtungen der beschriebenen Art ist u.a. darin zu sehen, daß die Energieversorgung bislang üblicherweise von einer weit entfernten, z.B. netzgespeisten, Energiequelle aus über ein entsprechendes Feldbus-System erfolgt, wobei die eingespeiste Energie, z.B. hinsichtlich der Spannungshöhe, mehrfach umgeformt werden muß. Darüber hinaus erfordert die zwecks der Energieversorgung erforderliche Verkabelung zumeist einen relativ hohen Installationsaufwand, wobei schon allein die Kabel erhebliche Kosten verursachen können.

In der DE 100 37 911 A1, der DE 201 07 114 U1 oder auch der DE 199 29 343 sind bereits Vorrichtungen zur Bestimmung und/oder Überwachung einer physikalischen oder chemischen Prozeßgröße vorgeschlagen geworden, die die zuvor genannten Nachteile abzustellen sucht. Die Vorrichtungen umfassen jeweils einen Sensorteil, einen Elektronikteil und ein Gehäuse. Zumindest der Elektronikteil ist in dem Gehäuse angeordnet. Ein weiteres Beispiel ist in DE19646219 reröffentlicht.

Darüber hinaus ist zumindest eine, z.B. mit Wasserstoff als Brennstoff zu betankende, Brennstoffzelle vorgesehen, über die der Energiebedarf der Vorrichtung zumindest teilweise gedeckt wird. Durch diese Ausgestaltung wird ein direkt im Feld mit Energie versorgtes Meßgerät bereitgestellt, das an einer beliebigen Stelle im Prozeß platziert und dort auch ggf. völlig autark, also ohne externe Energieversorgung betrieben werden kann.

Als problematisch bei diesen Lösungen hat sich jedoch neben der derzeit noch eher unzureichenden Leistungsfähigkeit, insb. auch einem noch nicht befriedigendem Leistungsgewicht, derartiger Brennstoffzellen vor allem auch das sehr aufwendige und in explosionsgefährdeten Bereichen eher kritische Nachfüllen des oftmals hochexplosiven Brennstoffs in die Brennstoffzellen der einzelnen Feldgeräte herausgestellt. Darüber hinaus wird die Leistung derartiger Brennstoffzellen in nicht unerheblichen Maße vom Raumklima, insb. aber auch von der Umgebungstemperatur, mit beeinflußt.

Der Erfindung liegt die Aufgabe zugrunde, eine über zumindest eine Brennstoffzelle mit Energie versorgte Vorrichtung vorzuschlagen, die für eine Nachbetankung mit Brennstoff leicht zugänglich ist und die auch einen Einsatz des damit versorgten Feldgeräts in Ex-Zonen ermöglicht.

Die Aufgabe wird durch eine Vorrichtung gelöst, die die folgenden Merkmale aufweist:
- das Feldgerät tauscht über eine Datenverbindung mit einer entfernten Kontrollstelle Daten aus;
- zumindest eine mit dem Feldgerät elektrisch verbundene Brennstoffzelle deckt den Energiebedarf des Feldgeräts zumindest teilweise;
- die Brennstoffzelle ist von dem Feldgerät entfernt angeordnet.

Je nach Anwendungsfall sind mehrere Brennstoffzellen zu einem Brennstoffzellen-Paket zusammengefaßt. Sind die Feldgeräte in einer explosions-gefährdeten Zone angeordnet, so kann die Brennstoffzelle von einer entfernten sicheren Stelle die Feldgeräte mit Energie versorgen. Weiterhin läßt sich durch diese Remote-Anordnung das allfällige Aufladen der zumindest einen Brennstoffzelle völlig gefahrlos durchführen. Da die zumindest eine Brennstoffzelle oder das Brennstoffzellen-Paket eine Vielzahl von Feldgeräten gleichzeitig mit Energie versorgen kann, wird das Nachfüllen des Brennstoffs erheblich erleichtert, da es nur noch von einer zentralen Stelle aus erfolgt.

Gemäß einer Weiterbildung der erfindungsgemäßen Vorrichtung ist die Datenverbindung zwischen der Kontrollstelle und dem zumindest einen Feldgerät drahtlos oder über eine Datenleitung ausgeführt. Bevorzugt handelt es sich bei der Datenleitung und der Energieversorgungsleitung um dieselbe Leitung. Bei der Datenleitung kann es sich um einen Feldbus oder um eine Zweidrahtleitung handeln. Die entfernt angeordnete Brennstoffzelle bzw. das entfernt angeordnete Brennstoffzellen-Paket speist die Energie in den Feldbus bzw. in die Zweidrahtleitung ein und stellt somit die Energieversorgung aller an den Bus bzw. an die Leitung angeschlossenen Feldgeräte sicher. Bevorzugt ist die zumindest eine Brennstoffzelle in der Kontrollstelle oder in dem Kontrollraum angeordnet.

Eine vorteilhafte Weiterbildung der erfindungsemäßen Vorrichtung sieht vor, daß das zumindest eine Feldgerät zeitweise mit einer ersten Brennstoffzelle und mit einer zweiten Brennstoffzelle verbunden ist. Je nach Energiebedarf ist das Feldgerät bzw. der Feldbus oder die Verbindungsleitung zumindest zeitweise mit nur einer der beiden Brennstoffzellen verbunden. Hierdurch wird es möglich, eine Brennstoffzelle während des Auffüllens von dem Feldbus bzw. der Verbindungsleitung zu entkoppeln, ohne daß die Funktionstüchtigkeit der Feldgeräte in irgendeiner Weise beeinträchtigt wird.

Bei vielen Anwendungen sind die Feldgeräte in einem explosionsgefährdeten Bereich positioniert. Daher ist das Nachfüllen von Brennstoff bei den bekannten Lösungen problematisch bzw. unmöglich, da dies ein Verstoß gegen geltende Sicherheitsbestimmungen darstellen würde. Da erfindungsgemäß das Nachfüllen des Brennstoffes von einer beliebigen entfernten Stelle aus erfolgen kann, läßt sich ein Feldgerät bzw. ein Feldbus mit angeschlossenen Feldgeräten in jeder beliebigen Ex-Zone positioniert.

Eine vorteilhafte Weiterbildung der erfindungsgemäßen Vorrichtung sieht eine Überwachungseinheit vor, die eine Warnung/Fehlermeldung ausgibt, sobald die von der zumindest einen Brennstoffzelle gelieferte Energie einen vorgegebenen Grenzwert unterschreitet. Hierdurch wird ein kontinuierlicher Betrieb der Brennstoffzelle und des zumindest einen Feldgeräts sichergestellt, da ein Auffüllen erfolgt, bevor die Energiezufuhr unterbrochen wird. Des weiteren ist eine Aufladeeinheit vorgesehen, über die die zumindest eine Brennstoffzelle aufladbar ist. Bei der Aufladeeinheit handelt es sich im einfachsten Fall um eine Spritze.

Darüber hinaus kann die erfindungsgemäße Vorrichtung in vorteilhafter Weise auch dahingehend ausgestaltet werden, daß das Feldbus-System mit den daran angeschlossenen Feldgeräten ggf. völlig autark, also ohne eine netzgespeiste Energieversorgung betrieben werden kann, insb. auch dann, wenn die Kommunikation mit übergeordneten Kontrollstellen drahtlos erfolgt.

Die Erfindung wird anhand der nachfolgenden Zeichnungen näher erläutert. Es zeigen:
Fig. 1: eine schematische Darstellung einer ersten Ausführungsform der erfindungsgemäßen Vorrichtung und
Fig. 2: eine schematische Darstellung einer zweiten Ausführungsform der erfindungsgemäßen Vorrichtung.

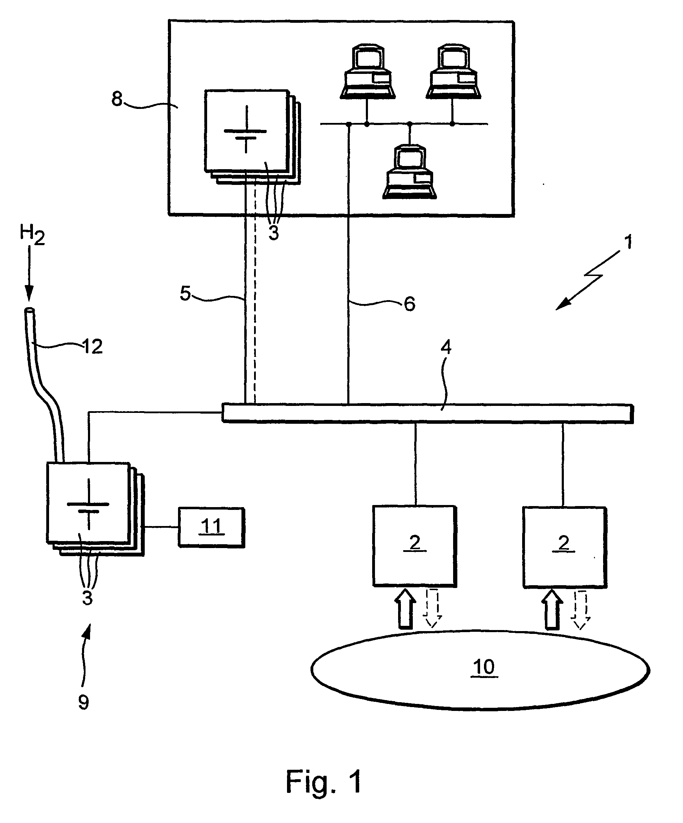

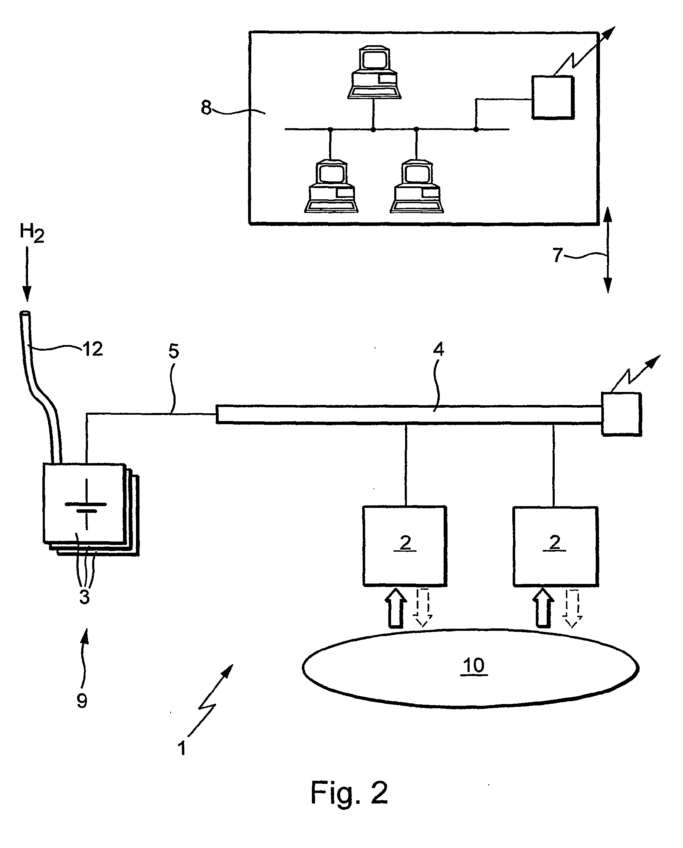

Fig. 1 zeigt eine schematische Darstellung einer ersten Ausführungsform der erfindungsgemäßen Vorrichtung 1; in Fig. 2 ist eine zweite Ausführungsform zu sehen.

Mehrere Feldgeräte 2 sind an einen Feldbus 4 angeschlossen. Die Feldgeräte 2 bestimmen eine oder mehrere Meßgrößen des Meßmediums 10. Die Feldgeräte 2 kommunizieren über eine Datenleitung 4, beispielsweise über einen Feldbus 4 oder eine Zweidrahtleitung, miteinander. Im in Fig. 1 gezeigten Ausführungsbeispiel erfolgt die Kommunikation mit der entfernt angeordneten Kontrollstelle 8 über die Datenleitung 6; im in Fig. 2 gezeigten Ausführungsbeispiel erfolgt die Kommunikation über eine drahtlose Verbindung 7 per Funk.

Der Feldbus 4 mit den Feldgeräten 2 wird über das Brennstoffzellenpaket 9, das aus einzelnen zusammengeschalteten Brennstoffzellen 3 besteht, mit der notwendigen Energie versorgt. Als Brennstoff kann hierbei z.B. flüssiger Wasserstoff dienen.

Sind die Feldgeräte 2 in einer explosions-gefährdeten Zone angeordnet, so ist das Brennstoffzellenpaket 9 bevorzugt in einem gesicherten Bereich, z. B. in dem Kontrollraum 8 angeordnet. Ansonsten kann die Einspeisung von Energie in den Feldbus 4 bzw. in die Zweidrahtleitung von jeder beliebigen Stelle aus erfolgen. Der Vorteil dieser Ausgestaltung ist, daß das allfällige Nachfüllen von Brennstoff in die Brennstoffzellen 4 von einer zentralen Stelle aus erfolgen kann. Diese zentrale Stelle kann sich z.B. im Kontrollraum oder aber auch nah am Prozeß befinden.

Es ist daher im Gegensatz zum eingangs erwähnten Stand der Technik nicht mehr notwendig, die Brennstoffzellen 3 eines jeden Feldgeräts 2 separat aufzufüllen. Vielmehr wird das Brennstoffzellen-Paket 9 bzw. wird die zumindest eine Brennstoffzelle 3 über eine elektrische Verbindungsleitung 5 an einer geeigneten Stelle an den Feldbus 4 angeschlossen; die Energie zur Versorgung der Feldgeräte 2 wird daher über den Feldbus 4 oder die Zweidrahtleitung den Feldgeräten bereitgestellt. Aus den zuvor bereits genannten Gründen sind die Brennstoffzellen 3 bzw. die zumindest eine Brennstoffzelle 3 in einer explosionsgeschützten Zone angeordnet und die Energiezufuhr zum Feldbus 4 erfolgt über die Verbindungsleitung 5.

Die Überwachungseinheit 11 überwacht den Vorrat an Brennstoff in dem Brennstoffzellen-Paket 9 und signalisiert dem Bedienpersonal, wenn der Brennstoffvorrat einen vorgegebenen minimalen Grenzwert unterschreitet. Das Nachfüllen von Brennstoff in die Brennstoffzellen 3 bzw. in das Brennstoffzellen-Paket 9 erfolgt mittels der Aufladeeinheit 12. Auf diese Art und Weise kann ein kontinuierlicher Betrieb aller an die Verbindungsleitung 4 angeschlossenen Feldgeräte 2 sichergestellt werden.

### Bezugszeichenliste

- 1: erfindungsgemäße Vorrichtung
- 2: Feldgerät
- 3: Brennstoffzelle
- 4: Feldbus
- 5: Verbindungsleitung
- 6: Verbindungsleitung
- 7: Drahtlose Kommunikation
- 8: Kontrollstelle
- 9: Brennstoffzellenpaket
- 10: Meßmedium
- 11: Überwachungseinrichtung
- 12: Aufladeeinheit

## Patentansprüche

1. Vorrichtung zur Bestimmung und/oder Überwachung einer physikalischen oder chemischen Größe im Prozeß mit zumindest einem, insb. in einer explosions gefährdeten Zone angeordneten, Feldgerät (2), wobei das Feldgerät (2) so eingerichtet ist um über eine Datenverbindung (6; 7) mit einer entfernten Kontrollstelle (8) Daten auszutauschen, und wobei zumindest eine mit dem Feldgerät (2) elektrisch verbundene Brennstoffzelle (3) vorgesehen ist, die den Energiebedarf des Feldgeräts (2) zumindest teilweise deckt, **dadurch gekennzeichnet, daß** die Brennstoffzelle (3) entfernt vom Feldgerät (2) in einer explosionsgeschützten Zone angeordnet ist.

2. Vorrichtung nach Anspruch 1, **dadurch gekennzeichnet, daß** die Datenverbindung (6 ; 7) zwischen der Kontrollstelle und dem zumindest einen Feldgerät (2) drahtlos oder über eine Datenleitung (6) erfolgt.

3. Vorrichtung nach Anspruch 1 oder 2, **dadurch gekennzeichnet, daß** mehrere Feldgeräte (2) vorgesehen sind, die mit der zumindest einen Brennstoffzelle (3) elektrisch verbunden sind.

4. Vorrichtung nach Anspruch 1, **dadurch gekennzeichnet, daß** die Datenverbindung (6; 7) zwischen der Kontrollstelle und dem zumindest einen Feldgerät (2) über eine Datenleitung (6) erfolgt, und daß die Datenleitung (4) ein Feldbus oder eine Zweidrahtleitung ist.

5. Vorrichtung nach Anspruch 4, **dadurch gekennzeichnet, daß** die zumindest eine Brennstoffzelle (3) mit dem zumindest einen Feldgerät (2) über den Feldbus (4) bzw. über die Zweidrahtleitung verbunden ist.

6. Vorrichtung nach Anspruch 1, 3 oder 5, **dadurch gekennzeichnet, daß** die zumindest eine Brennstoffzelle (3) in der Kontrollstelle (8) angeordnet ist.

7. Vorrichtung nach Anspruch 1, **dadurch gekennzeichnet, daß** das zumindest eine Feldgerät (2) zumindest zeitweise mit einer ersten Brennstoffzelle (3) und einer zweiten Brennstoffzelle (3) verbunden ist.

8. Vorrichtung nach Anspruch 7, **dadurch gekennzeichnet, daß** das Feldgerät (2) zumindest zeitweise mit nur einer der beiden Brennstoffzellen (3) verbunden ist.

9. Vorrichtung nach einem oder mehreren der Ansprüche 1 bis 8, wobei mehrere Brennstoffzellen (3) zu einem Brennstoffzellen-Paket (9) zusammengefasst sind.

10. Vorrichtung nach Anspruch 1 oder 9, **dadurch gekennzeichnet, daß** das zumindest eine Feldgerät (2) in einem explosionsgefährdeten Bereich positioniert ist.

11. Vorrichtung nach Anspruch 1 oder 9, **dadurch gekennzeichnet, daß** eine Überwachungseinheit (11) vorgesehen ist, die eine Warnung/Fehlermeldung ausgibt, sobald die von der zumindest einen Brennstoffzelle (3) gelieferte Energie einen vorgegebenen Grenzwert unterschreitet.

12. Vorrichtung nach Anspruch 1 oder 11, **dadurch gekennzeichnet, daß** eine Aufladeeinheit (12) vorgesehen ist, über die die zumindest eine Brennstoffzelle (3) aufladbar ist.

## Claims

1. Unit for determining and/or monitoring a physical or chemical variable in the process with at least one field device (2), arranged in particular in a hazardous area, where the field device (2) is set up in such a way to exchange data with a remote control point (8) via a data connection (6, 7) and where at least one fuel cell (3) that is electrically connected to the field device (2) is provided, and this fuel cell at least partially covers the energy requirements of the field device (2), **characterized in that** the fuel cell (3) is arranged at a distance from the field device (2) in an explosion protected zone.

2. Unit as per Claim 1, **characterized in that** the data connection (6, 7) between the control point and the one field device at least (2) is wireless or takes place via a data cable (6).

3. Unit as per Claim 1 or 2, **characterized in that** several field devices (2) are provided that are electrically connected to the one fuel cell at least (3).

4. Unit as per Claim 1, **characterized in that** the data connection (6, 7) between the control point and the one field device at least (2) takes place via a data cable (6) and **in that** the data cable (4) is a fieldbus or a two-wire cable.

5. Unit as per Claim 4, **characterized in that** the one fuel cell at least (3) is connected to the one field device at least (2) via the fieldbus (4) or via the two-wire cable.

6. Unit as per Claim 1, 3 or 5, **characterized in that** the one fuel cell at least (3) is arranged in the control point (8).

7. Unit as per Claim 1, **characterized in that** the one field device at least (2) is connected at least partially to an initial fuel cell (3) and a second fuel cell (3).

8. Unit as per Claim 7, **characterized in that** the field device (2) is connected at least partially to only one of the two fuel cells (3).

9. Unit as per one or more of the Claims 1-8, where several fuel cells (3) are grouped to form a fuel cell package (9).

10. Unit as per Claim 1 or 9, **characterized in that** the one field device at least (2) is positioned in a hazardous area.

11. Unit as per Claim 1 or 9, **characterized in that** a monitoring unit (11) is provided that issues a warning/error message as soon as the power provided by the one fuel cell at least (3) drops below a specified limit value.

12. Unit as per Claim 1 or 11, **characterized in that** a charger (12) is provided via which the one fuel cell at least (3) can be charged.

## Revendications

1. Dispositif destiné à la détermination et/ou la surveillance d'une grandeur physique ou chimique au sein du processus, avec au moins un appareil de terrain (2), disposé notamment dans une zone à atmosphère explosible, l'appareil de terrain (2) étant configuré de telle manière à échanger des données par l'intermédiaire d'une liaison de données (6, 7) avec un poste de contrôle (8) distant, et pour lequel est prévue au moins une cellule électrochimique (3) reliée électriquement avec l'appareil de terrain (2), laquelle cellule couvre au moins partiellement le besoin en énergie de l'appareil de terrain (2), **caractérisé en ce que** la cellule électrochimique (3) est disposée à distance de l'appareil de terrain (2), dans une zone protégée contre les explosions.

2. Dispositif selon la revendication 1, **caractérisé en ce que** la liaison de données (6, 7) entre le poste de contrôle et l'au moins un appareil de terrain (2) s'effectue sans fil ou par l'intermédiaire d'une ligne de données (6).

3. Dispositif selon la revendication 1 ou 2, **caractérisé en ce que** sont prévus plusieurs appareils de terrain (2), qui sont reliés électriquement avec au moins une cellule électrochimique (3).

4. Dispositif selon la revendication 1, **caractérisé en ce que** la liaison de données (6, 7) entre le poste de contrôle et l'au moins un appareil de terrain (2) s'effectue par l'intermédiaire d'une ligne de données (6), et **en ce que** la ligne de données (4) est un bus de terrain ou un câble à deux conducteurs.

5. Dispositif selon la revendication 4, **caractérisé en ce qu'**au moins une cellule électrochimique (3) est reliée avec l'au moins un appareil de terrain (2) par l'intermédiaire du bus de terrain (4) ou du câble à deux conducteurs.

6. Dispositif selon la revendication 1, 3 ou 5, **caractérisé en ce que** l'au moins une cellule électrochimique (3) est disposée dans le poste de contrôle (8).

7. Dispositif selon la revendication 1, **caractérisé en ce que** l'au moins un appareil de terrain (2) est relié au moins temporairement avec une première cellule électrochimique (3) et une deuxième cellule électrochimique (3).

8. Dispositif selon la revendication 7, **caractérisé en ce que** l'appareil de terrain est relié au moins temporairement avec une seule des deux cellules électrochimiques (3).

9. Dispositif selon l'une des revendications 1 à 8, pour lequel plusieurs cellules électrochimiques (3) sont regroupées en une pile de cellules électrochimiques (9).

10. Dispositif selon la revendication 1 ou 9, **caractérisé en ce que** l'au moins un appareil de terrain (2) est positionné dans une zone à atmosphère explosible.

11. Dispositif selon la revendication 1 ou 9, **caractérisé en ce qu'**est prévue une unité de surveillance (11), qui émet un avertissement / message d'erreur sitôt que l'énergie fournie par au moins une cellule électrochimique (3) parvient sous un seuil prédéfini.

12. Dispositif selon la revendication 1 ou 11, **caractérisé en ce qu'**est prévue une unité de recharge (12), par l'intermédiaire de laquelle l'au moins une cellule électrochimique (3) est rechargeable.
